# EUROPEAN PATENT APPLICATION

(11) **EP 2 295 507 A1**
(43) Date of publication of application: **16.03.2011**
(21) Application number: 09773465.1
(22) Date of filing: 30.06.2009
(51) Int. Cl.: C09D 11/00, C09D 11/02, C09K 11/82

(54) **INK COMPOSITION**

(30) Priority: 30.06.2008 JP 2008171410
(71) Applicant: Keio University, Tokyo 108-8345 (JP); Sinloihi Co., Ltd., Kanagawa 247-8550 (JP)
(72) Inventor: ISOBE Tetsuhiko, Yokohama-shi Kanagawa 223-8522 (JP); TAKESHITA Satoru, Yokohama-shi Kanagawa 223-8522 (JP); KONO Mitsuru, Kamakura-shi Kanagawa 247-8550 (JP); NIIKURA Seiji, Kamakura-shi Kanagawa 247-8550 (JP)
(74) Representative: Gulde Hengelhaupt Ziebig & Schneider
(86) International application number: PCT/JP2009/061945
(87) International publication number: WO 2010/001887

(57) **Abstract**

An ink composition comprising a microparticulate fluorescent material which can emit a high brightness fluorescent light by ultraviolet ray and has a predetermined nanosize is provided. The ink composition comprises a microparticulate fluorescent material represented by the formula YVO₄:A, wherein A is a rare earth metal other than yttrium, which can emit a fluorescent light by the excitation with ultraviolet ray. The fluorescent material has an average primary particle size of 30 to 400nm and has not been calcined. The fluorescent material is prepared by, for example, mixing Composition (I) containing a yttrium compound, a compound of rare earth metal other than yttrium and a complex forming compound in water with Composition (II) containing a vanadium compound in water and then reacting them.

## Description

### Technical Field

The present invention relates to an ink composition comprising a microparticulate fluorescent material which can emit a high-brightness fluorescent light by ultraviolet ray and has a nanosize.

### Background Art

Conventionally, in the art/decoration field and security field, various inorganic fluorescent materials which emit a fluorescent light by illuminating an active energy ray, such as ultraviolet ray, have been used. In general, a fluorescent material powder is added to a paint or ink and a target is subjected to painting or silk-screen printing with the paint or ink. Specifically, in the art/decoration field, an artist or industrial art painting technical expert draws a predella on a wall or ceiling of a theme park, hotel, subway or train with the above-mentioned paint containing fluorescent material and then an ultraviolet light is irradiated to the predella by a black light and the like in order to display more vividly the predella. In the security field, the silk-screen printing is used in particular.

However, in general, an inorganic fluorescent material is prepared by a dry method (powder metallurgy method); that is, inorganic compound powders as raw materials are mixed, are calcined at from a few hundred °C to one thousand and a few hundred °C and then are physically crushed. In such a dry method, an average particle size of the inorganic fluorescent material is large, such as from 5 *µ*m to few ten *µ*m. Thus, a surface printed by a fluorescent ink containing the inorganic fluorescent material is slightly rough. Therefore, a feeling, when the surface is touched by a finger, and appearance such as a gloss and the like of the surface printed by the fluorescent ink are different from those of a general ink, that is, non-fluorescent ink. Therefore, in the security field in which high precision is required, market needs are not satisfied. In addition, recently, since an inkjet printing technique has been exponentially advanced, a lot of billboards which have a vivid color and high precision exist.

Also, in the above-mentioned art/decoration field and security field, by using such a printing technique such as inkjet printing and offset printing and the like, it is expected to obtain an invisible printing product which has a high precision and durability.
However, in the inkjet printing, a printer having a discharge nozzle having a nozzle size of few ten µm is generally used and therefore, when a ink containing a conventional inorganic fluorescent material is printed, there are problems such that the nozzle gets jammed, a dispersal stability of the ink grows worse and the ink cannot be continuously printed for a long time.

Furthermore, the offset printing is a printing method wherein an ink is first transferred from a flat plate to a rubber blanket and the like and then the ink on the blanket is transferred to a substrate. Therefore, if the inorganic fluorescent material having a large particle size such as few tens of µm is used, there are problems such that a defect on a printing surface is easily produced and the inorganic fluorescent material is easily broken. In view of the above, although there is a high need for printing an ink containing an inorganic fluorescent material by the inkjet printing or offset printing, in fact such printing has not been in practical use.
On the other hand, a method of producing nanosize fluorescent material which does not rely on the dry method is proposed in patent documents 1 and 2. However, this nanosize fluorescent material is used for a color display in the patent document 1 and the patent document 1 does not disclose that the nanosize fluorescent material is applied to an ink. Furthermore, in the patent document 2, an average particle size of a vanadium acid salt particle of a rare earth element as a fluorescent material is small, such as 6 nm or less, and therefore an emission brightness of the fluorescent material is low, the fluorescent material is unserviceable and it is difficult to re-disperse the fluorescent material into primary particles. Furthermore, the patent document 2 does not disclose that the fluorescent material is applied to the ink.

### Prior Art Literature

### Patent Document:

Patent Document 1: JP-A-2007-284304
Patent Document 2: Japanese Patent No. 4017597

### Summary of the Invention

### Problems that the Invention is to Solve

The present invention is achieved in view of the above mentioned background art. The object of the present invention is to provide an ink composition comprising a microparticulate fluorescent material. When the ink composition is printed by the inkjet printing, it is difficult for the nozzle to get jammed. The ink composition has a good dispersal stability and therefore the ink composition can be stably printed for a long time. Furthermore, even if the ink composition is printed by the offset printing method, it is difficult for a defect in the substrate to be caused. Furthermore, the ink composition can be used to the security field. The ink composition can emit a high-brightness fluorescent light by an ultraviolet ray.

### Means for solving the problem

As a result of the study of the prior art, the inventors of the present invention have found that the above-mentioned object can be achieved by adding to an ink a microparticulate fluorescent material having a nanosize which is prepared by a specific production method which does not rely on the dry method, and then completed the present invention.
That is, the present invention relates to an ink composition containing a microparticle fluorescent material represented by the formula YVO₄:A wherein A represents a rare earth metal other than yttrium which emits a fluorescent light by illuminating an ultraviolet ray, wherein said fluorescent material has an average primary particle size of 30∼400nm and has not been calcined. The microparticle fluorescent material of the present invention can be obtained by, for example, mixing Composition (I) comprising a yttrium compound and a compound of a rare earth metal other than yttrium and a complex forming agent in water with Composition (II) comprising a vanadium compound in water, and reacting them.

### Effect of the present invention

The ink composition of the present invention contains a fluorescent material having a predetermined nanosize which is invisible under visible light and emits a fluorescent light by an ultraviolet ray. Therefore, when the ink composition is printed by the inkjet printing method, it is difficult for the nozzle to get jammed. The ink composition of the present invention has a good dispersion stability and therefore can be continuously printed for a long time. Furthermore, even when the ink composition of the present invention is printed by the offset printing method, any defect would not be caused on the substrate and the inorganic fluorescent material would not be easily broken and therefore a good printed surface can be produced.
Furthermore, in case where the ink composition is used in the security field, a feeling when the surface is touched by a finger, and appearance such as a gloss and the like of the surface printed by the fluorescent ink are not substantially different from those of a non-fluorescent ink under visible light. Therefore, the ink composition can be applied to a field wherein it is necessary to hide the part to be hidden in stocks and bonds so as to prevent counter-feiting. Furthermore, the ink composition of the present invention is transparent and has an ability to convert ultraviolet light/visible light and therefore is useful as material for improving power generation efficiency of a solar battery.

### Mode for carrying out the invention

The present invention will be explained in detail below.
The present invention relates to the ink composition containing a microparticulate fluorescent material which will be explained below, instead of a color dye or color pigment, or in addition to them in the well-known various ink compositions.
The microparticulate fluorescent material is prepared, for example, by the following steps (1) to (3).
(1) adding a yttrium compound, a compound of a rare earth metal other than yttrium and a complex forming agent to water and then dissolving or dispersing them in order to prepare Composition (I),
(2) adding a vanadium compound to water and then dissolving or dispersing it in order to prepare Composition (II), and
(3) mixing Composition (I) with Composition (II) and reacting them.

The yttrium compound preferably includes hydroxides; chelate compounds such as amino carboxylic acid type chelating agents and phosphonic acid type chelating agents; oxygen acid salts of yttrium such as nitrate, sulfate, phosphate, borate, silicate, vanadate and the like; organic salts such as carboxylates, sulfonates, phenoxides, sulfinates, salts of 1,3-diketon type compounds, thiophenolates, oxime salts, salts of aromatic sulfonamides, salts of primary and secondary nitro compounds and the like; halides such as of fluorine, chlorine, bromine and the like; alkoxides such as liner or branched alkoxy groups having 1∼15 carbon atoms such as methoxy group, ethoxy group, propoxy group, butoxy group and the like. The representative examples of these compounds include nitrates; sulfates; phosphates; borates; silicates; carbonate; carboxylates such as oxalic acid, acetic acid, benzoic acid and the like as a carboxylic acid; halides and alkoxides. Among them, nitrates, carboxylates and alkoxides can be preferably used. The representative example of them includes yttrium nitrate, yttrium oxalate, yttrium isopropoxide and the like.

The rare earth metal elements other than yttrium preferably include Sc, La, Ce, Pr, Nd, Pm, Sm, Eu, Gd, Tb, Dy, Ho, Er, Tm, Yb, Lu and the like. The rare earth compounds preferably include rare earth metal elements themself; hydrides; halides such as of fluorine, chlorine, bromine and the like; hydroxide; sulfides; oxygen acid salts such as nitrates, sulfates, phosphates, borates, silicates, vanadates and the like; organic salts such as carboxylates, sulfonates, phenoxides, sulfinates, salts of 1,3-diketon type compounds, thiophenolates, oxime salts, salts of aromatic sulfonamides, salts of primary and secondary nitro compounds and the like; alkoxides such as liner or branched alkoxy groups having 1∼15 carbon atoms such as methoxy group, ethoxy group, propoxy group, butoxy group and the like. The representative example of them preferably include europium nitrate, erbium nitrate, terbium nitrate, samarium acetate, cerium nitrate and the like and, among them, Eu compounds can be preferably used.

The vanadium compounds preferably include hydroxides; chelate compounds such as amino carboxylic acid type chelating agents and phosphonic acid type chelating agents; oxides; oxygen acid salts such as nitrates, sulfates, phosphates, borates, silicates, vanadates and the like; organic salts such as carboxylates, sulfonates, phenoxides, sulfinates, salts of 1,3-diketon type compounds, thiophenolates, oxime salts, salts of aromatic sulfonamides, salts of primary and secondary nitro compounds and the like; halides such as of fluorine, chlorine, bromine and the like; alkoxides such as liner or branched alkoxy groups having 1∼15 carbon atoms such as the methoxy group, ethoxy group, propoxy group, butoxy group and the like. The representative example of these compounds include nitrates; sulfates; phosphates; borates; silicates; vanadates; carbonates; carboxylates such as oxalic acid, acetic acid, benzoic acid and the like as carboxylic acids; halides and alkoxides and the like. Among them, nitrates, vanadates, carboxylates and alkoxides can be preferably used. The representative example of them include triisopuropoxy vanadium oxide, sodium vanadate, potassium vanadate and the like.

An auxiliary activator B can be further added to the fluorescent material represented by the above-mentioned formula YVO₄:A wherein A is a rare earth metal element other than yttrium. In such a case, the fluorescent material is represented by a formula YVO₄:A,B wherein A is a rare earth metal element other than yttrium and B is an element belonging to any of Groups 13 to 17 of the periodic table (long form) (referred to as "P block element" hereinafter). The specific examples of the P block elements include Al, Zn, Ga, Ge, Cd, In, Sn, Sb, Hg, Tl, Pb, Bi and Po. Among them, Bi, Ga and Ge can be preferably used, and specifically preferably Bi. Without wishing to be bound by any theory, it can be considered that bismuth efficiently transfers energy excited by black light to A in order to improve emission brightness. In the situation where the P block element is used for a fluorescent material synthesis reaction, the P block element compounds such as hydrides; halides such as of fluorine, chlorine, bromine and the like; hydroxides; sulfides; oxygen acid salts such as nitrates, sulfates, phosphates, borates, silicates, vanadates and the like; organic salts such as carboxylates, sulfonates, phenoxides, sulfinates, salts of 1,3-diketon type compounds, thiophenolates, oxime salts, salts of aromatic sulfonamides and salts of primary and secondary nitro compounds; alkoxides such as liner or branched alkoxy groups having 1∼15 carbon atoms such as methoxy group, ethoxy group, propoxy group, butoxy group and the like are preferably used. In addition, when the P block element compounds, especially Bi compounds are added to the fluorescent material, it is preferable in view of homogeneousness of a reaction that the Bi compound is previously dissolved by mono or poly ethylene glycol (having a molecular weight so that they are in a liquid state under ordinary temperature) and then the solution is added to Composition (I) or Composition (II).

The complex forming compound is a substance which forms a complex with yttrium or the rare earth metal element and the P block element. The complex forming compound contains two or more of three elements such as oxygen, nitrogen and sulfur which make a configuration together with a metal ion. The complex forming compound is a compound which forms a chelate ring. The complex forming compound is a multidentate compound having O-O coordination, N-N coordination, S-S coordination, O-N coordination, S-N coordination, O-S coordination or a combination thereof. Oxalic acid, citric acid, sodium salts thereof, acetyl acetone, ethylene diamine, 1,10-phenanthroline, dithiol, ethylene diamine tetra acetic acid (EDTA), thiooxine 3-mercapto-p-cresol and derivative thereof are specifically listed. Citric acid, oxalic acid, sodium salts thereof and the like can be specifically preferably used in the present invention, but is not only limited to them. To add the complex forming compound to the fluorescent material is effective to control the deposition of mixed crystal and growth of particles and furthermore makes a stability of a generated microparticulate fluorescent material good.
The fluorescent material contains the rare earth metal element as a luminescent center (activator) and the auxiliary activator which support the light emmiting of an optional activator inside crystal of a yttrium oxide, and therefore the fluorescent material emits light by an excitation source such as ultraviolet light.

Without wishing to be bound by any theory, it can be considered on the basis of an experimental observation that a yttrium compound, an activator raw material compound and an auxiliary activator raw material compound are dissolved or dispersed in water and form mixed crystal under the presence of the complex forming compound, and then the vanadium compound is added thereto to synthesize the microparticulate fluorescent material.
Therefore, it is necessary to use an amount of the yttrium compound, the activator raw material compound (A component compound) and the auxiliary activator raw material compound (the P block element compound) so that these compounds can be sufficiently dissolved or stably dispersed in water.
In Composition (I), it is suitable that an amount of the yttrium compound to be used is generally 0.0001∼0.6g, preferably 0.001∼0.5g per amount of the 1ml of water.

By using the yttrium compound in the above-mentioned amount range, it is possible to obtain an aqueous dispersion of the microparticulate phophor having an average primary particle size of 30∼400nm. If the average primary particle size is less than 30nm, light emitting brightness is small and it may be very difficult to re-disperse the dispersion. If the average primary particle size is more than 400nm, a disperse of the dispersion may be unstable in a low viscosity solvent and therefore it is not preferable.
The average primary particle size can be measured by a dynamic light scattering measurement method, for example, Malvern HPPS (manufactured by Malvern).
If the above-mentioned amount is, for example, less than 0.0001 mass part, it tends to decrease a production efficiency of the micropartuculate fluorescent material. If the above-mentioned amount is more than 0.6 mass part, the microparticulate fluorescent material may agglomerate and therefore it may be difficult to obtain an objective dispersion containing a uniformly dispersed microparticulate fluorescent material.
Also, an amount of the rare earth metal element other than yttrium depends on the solubility or dispersibility of the rare earth metal element in water. In order to prepare the microparticulate fluorescent material having a high light emitting brightness with good production efficiency, it is preferable that the amount of the rare earth metal element be limited to less than 0.7 mole, preferably 0.0005∼0.5mole, per 1 mole of the above-mentioned yttrium element.

An amount of the complex forming compound is 0.0001∼0.8g, preferably 0.001∼0.7g, per 1ml of water. It is necessary to add the complex forming compound in order to form a complex while taking the amounts of yttrium element, the rare earth metal element and bismuth element into consideration. Since the complex forming compound distributes a dispersion stability of particles, if the amount of the complex forming agent is small, the complex forming compound does not work as a dispersant and therefore it is not preferable.
In Composition (II), it is preferable that an amount of the vanadium compound be in the amount of 0.0001∼0.6g, preferably 0.001∼0.5g, per 1ml of water.

An amount of the P block element B depends on a solubility or dispersibility of the element in water. In order to prepare the microparticulate fluorescent material having a high light emitting brightness with good production efficiency, it is preferable that the amount of the P block element B be limited to an amount of less than 0.8 mole, preferably 0.0005∼0.6 mole, per 1 mole of the above-mentioned yttrium element. The P block element B compound can be added to Composition (I) or Composition (II) at an optional time. In the situation where Bi compound is added, as mentioned above, Bi compound is previously dissolved into mono or poly ethylene glycol and then the solution is added to at least one of Composition (I) and Composition (II). In such a case, the mass ratio of the Bi compound to mono or poly ethylene glycol of, for example, 100:100∼20000 is suitable.

In the situation where the multiple yttrium compound, the compound of a rare earth metal element other than yttrium, vanadium compound and optionally the Pblock element compound are used at the same time, a composition ratio of them can vary on the basis of a composition, particle size and the like of the obtained micraparticulate fluorescent material, ad libitum.
In the method for production of the fluorescent material, it is preferable to control a pH at step 3 wherein Composition (I) is mixed with Composition (II), and thereby a generation of fluorescent material can be accelerated. pH is, for example, about 4∼11, preferably pH6∼10. If pH is less than 4, poly vanadic acid may be easily generated. Tf pH is more than 11, a hydroxide may be easily generated and therefore it is difficult to obtain the objective fluorescent material.
The reaction can be carried out under either atmospheric pressure or a pressure which is more than a boiling point of water. If the reaction is carried out under atmospheric pressure, a larger production equipment is not necessary and therefore it is possible to prepare the microparticulate fluorescent material with better production efficiency and convenience.

It is preferable that a heating temperature be, if the reaction is carried out under atmospheric pressure, for example, 20°C∼100°C. If the heating temperature is less than 20°C, the reaction rate for forming the microparticulate fluorescent material may be significantly low and therefore it tends to decrease a production efficiency. A reaction time under atmospheric pressure which is, for example, 1 minute - 72 hours, preferably 10 minutes ∼ 10 hours is sufficient.
Under compressed pressure, the reaction can be carried out under a high temperature of an order of 100 - 400°C. In such a case, there is obtained an advantage wherein the solubility of raw materials is increased and the reaction time can be shortened.
In order to improve a dispersion stability during the reaction, an organic dispersant such as surfactant, an inorganic dispersant, a macromolecular dispersant and an ion distributing a dispersion stability (for example, acetate ion) may be added. If necessary, an additive such as an antioxidant and a reducing agent may be added.
The reaction can be carried out under a nitrogen gas or argon gas atmosphere which can prevent oxygen being mixed into a reaction system, prevent the fluorescent material from decreasing fluorescence intensity of the fluorescent material, coloring of the product and decreasing of a performance of the fluorescent material.

It is preferable that the reaction be carried out with a mixer in order to stir water. By using such a mixer, it is possible to make the reaction system uniform, improve production efficiency and stably prepare the microparticulate fluorescent material uniform.
The microparticulate fluorescent material obtained thereby has an average primary particle size of 30∼400nm, which is a very small particle size when compared with a conventional fluorescent material. It is suitable that an average primary particle size of the fluorescent material used in the present invention be 30∼400nm, preferably 35∼200nm. If the average primary particle size is less than 30nm, a light emitting brightness may be small and it is difficult to re-disperse the fluorescent material, and therefore it is unserviceable. On the other hand, if the average primary particle size is more than 400nm, if a secondary agglomeration of the fluorescent material occurs, a nozzle may get jammed and a dispersion of the fluorescent material in a low viscosity solvent may be unstable due to its high specific gravity. It is necessary to control the above-mentioned reaction conditions such as composition ratio, pH, temperature, pressure, reaction time and the like in order to prepare the microparticulate fluorescent material.

The above-mentioned fluorescent material is invisible under visible light. However, the fluorescent material emits a fluorescent color by illuminating ultraviolet light. The fluorescent material is, especially, excited by near-ultraviolet light having a wavelength area of 300∼400nm, and therefore the fluorescent material can emit a fluorescent light by the light source such as a black light.
The above-mentioned fluorescent material which is added to the ink composition of the present invention is added to the ink composition, depending on the kind of the ink, for example, with or without processing the fluorescent material as follows. In this connection, the processing is not limited to the following processing.
(1) The fluorescent material obtained by the above-mentioned method which is dispersed in water (referred to as "fluorescent material aqueous dispersion" hereinafter) is used on its own or with addition of water or removing a part of water in order to adjust the amount of water. If the fluorescent material aqueous dispersion is used, it is preferable that the dispersion be added to an ink composition containing water as a solvent.

(2) The fluorescent material aqueous dispersion is filtered by decantation or centrifugation and, if necessary, a filter cake is washed with ion exchanged water, methanol and the like. Then, the fluorescent material is used on its own or as a fluorescent material which is fine powder without water which is obtained by removing residual water by re-centrifugation or filter press and then drying under vacuum, freeze drying or drying by heating (referred to as "fluorescent material fine powder" hereinafter). If the fluorescent material fine powder is used, the fluorescent material can be used for various ink compositions such as an ink composition containing various solvents such as water or an organic solvent or an UV cure ink composition without containing a solvent.

(3) The fluorescent material aqueous dispersion or a press cake (a slurry and solid which contain water) and solid which is obtained by centrifugation, filter press and the like in order to remove extra water is blended with a water hardly insoluble organic solvent in order to obtain the fluorescent material which is dispersed in an organic solvent (referred to as "fluorescent material organic solvent dispersion" hereinafter) by phase-exchanging of the fluorescent material into the organic solvent, separating and removing the water. This step is called flushing. Generally, this step is an operation wherein an organic solvent is strongly mixed with a pigment (fluorescent material) which contains water, in order to transfer the pigment (fluorescent material) into the organic solvent, remove the separated water and obtain the pigment (fluorescent material) and the like dispersed in the organic solvent. If the fluorescent material organic solvent dispersion is used, it is preferable that the dispersion be added to an ink composition containing an organic solvent as a solvent.

The ink composition into which these fluorescent materials have been introduced will be explained below.
Well-known various kinds of ink compositions can be used as an ink composition to which the microparticulate fluorescent material can be added without any specific limitation. In particular, the present ink composition can be preferably used as an inkjet printing ink and offset-printing ink.
The inkjet printing ink and offset-printing ink will be explained below.
As the inkjet printing ink, a conventionally well-known ink such as an aqueous inkjet printing ink which contains water or a mixture of water with a water soluble organic solvent as a solvent; an organic solvent inkjet printing ink which does not substantially contain water; and an activated energy ray cure inkjet printing ink which does not contain a solvent or, if it contains a solvent, the amount is small, and in particular, UV cure inkjet printing ink, can be cited as typical inks. In this connection, the activated energy ray means an energy ray, which affects an electron orbit of an illuminated product in order to induce an anion, radical or cation polymerization, such as ultraviolet ray, electron beam, infrared radiation, visible light, radiation and the like. However, if the energy ray can induce a polymerization reaction, the energy ray is not limited to the above-mentioned energy rays.

As a representative example, the above-mentioned aqueous inkjet printing ink comprises a binder resin such as a water soluble resin, water dispersed resin and the like and a solvent such as water or a mixture of water with a water-soluble organic solvent as main components, and, if necessary, various additives such as a surfactant, an anti-drying agent, a conductivity regulator, an antiseptic agent, a fungicide, an anticorrosive, a dispersant, a pH adjuster, a light stabilizer, an antioxidant, in an amount to an extent that they do not affect a fluorescent light of the fluorescent material, of the UV absorber, and the like.
As the above-mentioned binder resin, any resin which can be dissolved into a solvent such as water or a mixture of water with a water-soluble organic solvent or can be stably dispersed into such a solvent (for example, an emulsion resin) can be used without any specific limitation. As a representative example, acryl resins, alkyd resins, polyester resins, silicone resins, fluorine containing resins, urethane resins, epoxy resins and the like can be listed.

As a representative example of the above-mentioned water soluble organic solvent, methanol, ethanol, n-propyl alcohol, iso-propyl alcohol, n-butanol, sec-butanol, t-butanol, iso-butanol, n-pentanol, glycerin, ethylene glycol, propylene glycol, diethylene glycol, pentamethylene glycol, trimethylene glycol, polyethylene glycol, 2-butyne-1,4-diol, 2-ethyl-1,3-hexanediol, 2-methyl-2,4-pentanediol, N-methyl-2-pyrrolidone, 1,3-dimethyl-2-imidazolidinone, 2-pyrrolidone, tripropylene glycol monomethylether, dipropylene glycol monoethylether, dipropylene glycol monomethylether, dipropylene glycol, triethylene glycol, diethylene glycol monobutylether, diethylene glycol monoethylether, diethyelene glycol monomethylether, ethylene glycol monoethylether, diethylene glycol diethyether and the like are listed.

It is suitable that a composition mass ratio of the binder resin to the solvent be (100:200∼7000), preferably (100:500∼5000). It is preferable that an amount of the water soluble organic solvent be 50mass% or less, preferably 30% or less, in the ink.
As a representative example, the above-mentioned organic solvent inkjet printing ink comprises a binder resin which can be dissolved or stably dispersed into an organic solvent and an organic solvent as main components, and, if necessary, an additive such as a conductivity regulator, a dispersant, a light stabilizer, an anti-oxidant, in an amount to an extent that they do not affect a fluorescent light of the fluorescent material, of the UV absorber, and the like.
As the above-mentioned binder resin, any resin which can be dissolved into an organic solvent or can be stably dispersed into such solvent can be used without any specific limitation. As a representative example, acryl resins, terpene resins, phenol resins, polyamide resins, alkyd resins, polyester resins, silicone resins, fluorine containing resins, urethane resins, epoxy resins, vinyl chloride resins, cellulose ester resins, polyvinyl butyral resins and the like can be listed.

As a representative example of the above-mentioned organic solvent, methanol, ethanol, propanol, ethylene glycol monoethylether, ethylene glycol monobutylether acetate, acetone, methylethylketone, ethyl acetate and butyl acetate can be listed.
It is suitable that a composition mass ratio of the binder resin to the organic solvent be (100:200∼6000), preferably (100:500∼5000).
As a representative example, the above-mentioned UV cure inkjet printing ink comprises an oligomer, a polymerizable monomer and a photo polymerization initiator as main components, and, if necessary, a non-reactive solvent, the above-mentioned various additives, a polymerization inhibitor, a light stabilizer and the like.
As a representative example of the above-mentioned oligomer, polyester (meth)acrylate oligomer, epoxy (meth)acrylate oilgomer, urethane (meth)acrylate oligomer, polyol (meth)acrylate oligomer, and the like can be listed, but not limited to them. These oligomers can be used solely or in a combination of two or more thereof. Since, in general, addition of oligomer tends to make a viscosity increase, there is known an ink formulation to which an oligomer is not added.

A representative example of the above-mentioned polymerizable monomer includes a monofunctional monomer such as methyl (meth)acrylate, ethyl (meth)acrylate, 2-hydroxyethyl (meth)acrylate, (meth)acrylic acid, styrene and the like, and a polyfunctional monomer such as hexane diol di(meth)acrylate, trimethylolpropane tri(meth)acrylate and the like can be listed but is not limited to them. These polymerizable monomers can be used solely or in a combination of two or more thereof.
It is preferable that the oligomer be used in a range of 0∼50% per total amount of the polymerizable monomer. If the ink contains a large amount of the oligomer, a viscosity of the ink increases and therefore it is difficult to stably discharge the ink from a discharge nozzle.

It is suitable that a composition ratio of the oligomer to the polymerizable monomer be (100:50∼4000), preferably (100:200∼2000).
A representative example of the above-mentioned photo polymerization initiator includes 2-hydroxy-2-methylpropiophenone, 2,2-dimethoxy-2-phenylacetophenone, benzoinisobutylether, 2,4-diethylthioxanthone, 2-isopropylthioxanthone, benzyl, 2,4,6-trimethylbenzoyldiphenylphosphineoxide, 2-benzyl-2-dimethylamino-1-(4-morpholinophenyl)-butan-1-one, bis(2,4,6-dimethoxybenzoyl)-2,4,4-trimethylpentylphosphineoxide, 1,2-octanedion, 1-(4-(phenyltio)-2,2-(O-benzoyloxime)), 1- hydroxycyclohexylphenylketone, benzoin ethylether, benzyldimethylketal, 2-hydroxy-2-methyl-1-phenylpropan-1-one 1-(4-isopropylphenyl)-2-hydroxy-2-methylpropan-1-one, 2-metyl-1-(4-methylthiophenyl)-2-morpholinopropan-1-one, benzophenone, 4-phenylbenzophenone, isophthalphenone, 4-benzoyl-4'-methyl-diphenylsulfide and the like can be listed. These photo polymerization initiators can be used solely or in a combination of two or more thereof. If necessary, a sensitizer such as trimethylamine, methyldimethanolamine, triethanolamine, p-diethylaminoacetophenone, ethyl p-dimethylaminobenzoate, isoamyl p-dimethylaminobenzoate, N,N-dimethylbenzylamine, 4,4'-bis(diethylamino)benzophenone and the like, and a polymerization promoter such as Darocur EHA, EDB (manufactured by Chiba Specialty Chemicals) and the like can be added.

A composition ratio of the photo polymerization initiator is 0.5∼30part, preferably 1∼20part, per 100 part of the total amount of the oligomer and the polymerizable monomer.
As the above-mentioned non-reactive solvent which is added if necessary, a ketone, an ether, an alcohol, an aliphatic and aromatic hydrocarbon organic solvent and the like can be listed. It is suitable that a mass composition ratio of the non-reactive solvent be 0∼100part, preferably 0∼50part, per 100part of the total amount of the oligomer and the polymerizable monomer.
The inkjet printing ink composition of the present invention is an ink composition wherein the above-mentioned microparticulate fluorescent material is contained in an amount of 1∼20%, preferably 2∼10%, based on the solid amount of the fluorescent material, in relation to the above-mentioned aqueous inkjet printing ink, organic solvent inkjet printing ink or UV cure inkjet printing ink.

If the inkjet printing ink of the present invention is applied to a substrate which does not need to be invisible under visible light, the ink may contain a color dye and a color pigment having a particle size of 1 µm or less. These dyes and pigments can be used solely or in a combination thereof. The color dye and color pigment includes a dye and pigment which are used in general printing, paint and the like can be used, but are not limited to them. The specific example of the dye and pigment includes an organic pigment, an inorganic pigment and bright pigment. Furthermore, metal powder, metal oxides, metal nitrides or mixed powder thereof can be added to the ink for a conductive pattern printing. The organic pigment includes azo, polyazo, anthraquinone, quinacridone, isoindoline, phthalocyanine, perylene, DPP, fluorescent pigment and the like. The inorganic pigment includes carbon powder such as acetyl carbon, carbon black, carbon nanotube, fullerene and graphite; chromic oxide; synthetic silica; titanium oxide; iron oxide; titanium black; cobalt oxide; copper oxide; conjugated oxide thereof, calcined pigment; zinc sulfide and the like. The bright pigment includes pearl pigment, flake pigment, aluminium pigment, bronze pigment and the like. The organic dye includes an acid dye, basic dye, reactive dye, vat dye, oil soluble dye, fluorescent bleach, fluorescent dye, light-harvesting dye and the like.
Furthermore, if necessary, an inorganic fluorescent material, which is prepared by another method and have a particle size of 1 µm or less, and photoluminescent pigments can be added to the ink.

The inkjet printing ink can be prepared by mixing the above-mentioned constituents and filtering and purifying the resultant mixture with a filter having the same pore size as or smaller pore size than a nozzle hole diameter.
As an inkjet printer, various conventional well-known printers can be used. For example, an electric charge control type, ink on-demand type, type for discharging ink from a thermal head or piezo head and the like can be cited.
The offset printing ink comprises a binder resin such as rosin denatured phenol resin, rosin ester resin, petroleum resin, alkyd resin, novolac resin and the like, drying oil such as linseed oil, China wood oil and the like, and high boiling petroleum solvent (having a boiling point of 230∼320°C), and, if necessary, an adjuvant such as a higher alcohol such as tridecyl alcohol and the like, wax, mineral oil, a gelling agent such as aluminium chelate and the like, a drying agent, and an anti-oxidant.
It is suitable that a composition mass ratio of the binder resin, drying oil and high boiling petroleum solvent be (100:30∼200:50∼200), preferably (100:40∼100:60∼100).

The offset printing ink of the present invention is an ink wherein the above-mentioned microparticulate fluorescent material is added in an amount of 1∼50%, preferably 2∼40%, based on an amount of solid content.
If the offset printing ink of the present invention is applied to a substrate which does not need to be invisible under visible light, the ink can contain a color dye and color pigment having a particle size of 1 µm or less. These dye and pigment can be used solely or in a combination thereof. As the color dye and color pigment, a dye and pigment which are used in general printing, paint and the like can be used, but are not limited to them. The specific example of the dye and pigment includes an organic pigment, an inorganic pigment and bright pigment. Furthermore, metal powder, metal oxide, metal nitride or mixture powder thereof can be added to the ink for a conductive pattern printing. The organic pigment includes azo, polyazo, anthraquinone, quinacridone, isoindoline, phthalocyanine, perylene, DPP, fluorescent pigment and the like. The inorganic pigment includes carbon powder such as acetyl carbon, carbon black, carbon nanotube, fullerene and graphite; chromic oxide; synthetic silica; titanium oxide; iron oxide; titanium black; cobalt oxide; copper oxide; conjugated oxide thereof; calcined pigment; zinc sulfide; and the like. The bright pigment includes pearl pigment, flake pigment, aluminium pigment, bronze pigment and the like. The organic dye includes an acid dye, basic dye, reactive dye, vat dye, oil soluble dye, fluorescent bleach, fluorescent dye, light-harvesting dye and the like.

Furthermore, if necessary, an inorganic fluorescent material, which is prepared by another method and have a particle size of 1 µm or less, and photoluminescent pigment can be added to the ink.
The offset printing ink can be prepared by heating and melting these components and, for example, mixing them with a milling machine such as a three-roll mill and the like. Furthermore, the present invention can be applied to an activated energy ray (such as ultraviolet ray) curable offset ink.

### Examples

The present invention will be explained in detail with reference to the following Examples, but these Examples do not limit the scope of the present invention. "Part" and "%" in Examples are based on mass unless specifically explained.

### <Reference Example 1>

A condenser as a reflux, thermometer and stirrer were attached to a 200ml four neck flask and the flask was put in a water bath. 40.0ml of water, 1.00g (2.6mmol) of yttrium nitrate hexahydrate, 0.09g (0.2mmol) of europium nitrate hexahydrate and 0.62g of trisodium citrate dihydrate were added to the flask and then mixing was carried out at 60°C for 2 hours to prepare Solution 1.
Separately, 40.0ml water which had been adjusted to pH 12.5 by sodium hydroxide was measured and then 0.55 (3.0mmol) of sodium ortho-vanadate was added thereto and dissolved to prepare Solution 2. Then, Solution 2 was added dropwise to the above-mentioned three-neck flask containing Solution 1.

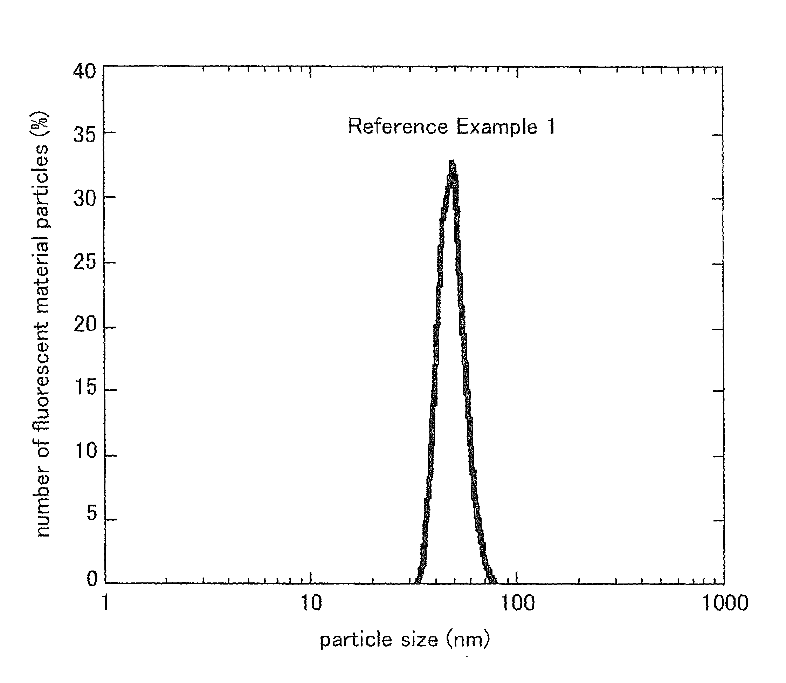

After completion of the above adding, stirring was carried out at 60°C for 3 hours. The pH immediately after the solution was added dropwise was 8.5. After that, the solution was cooled until reaching room temperature to obtain a yellowish white turbidity aqueous dispersion. The resultant dispersion was treated with an ultrasonic homogenizer, then measured by Malvern HPPS (manufactured by Malvern). It was found that the homogenous particles had an average particle size of 48nm (see Fig. 1).
This dispersion was irradiated with an ultraviolet lump having a dominant wavelength of 302nm and a red fluorescence emission was observed. Furthermore, an emission wavelength was confirmed by PL-250 (manufactured by JASCO corp.) and a peak of the emission wavelength was found to be at 615nm. The microparticles were subjected to definition by X-ray diffractometer (XRD-6100, manufactured by Shimazu Corporation) and the result corresponded with diffraction data of yttrium vanadate. Furthermore, the fluorescent material was studied by an ICP emission spectrophotometer (TCPS-7510, manufactured by Shimazu Corporation) and it was found that the fluorescent material was a substrate comprising vanadium, yttrium and europium elements.
This dispersion (referred to as "Fluorescent material aqueous dispersion 1" hereinafter) was used as a microparticulate fluorescent material which was added to an ink composition of the following Example.

### <Reference Example 2>

A condenser as a reflux, thermometer and stirrer were attached to a 200ml four neck flask and the flask was put in a water bath. 40.0ml of water, 0.10g (0.3mmol) of yttrium nitrate hexahydrate and 0.05g (0.1mmol) of terbium nitrate hexahydrate were added to the flask, mixing was carried out at 80°C for 1 hours, 0.19g of oxalic acid was added and then mixing was carried out at 80°C for 2 hours to prepare Solution 1.
Separately, 40.0ml water which had been adjusted to pH 12.5 by sodium hydroxide was measured and poured into a 100ml beaker and then 0.06g (0.3mmol) of sodium ortho-vanadate was added thereto and dissolved to prepare Solution 2. Then, Solution 2 was added dropwise to the above-mentioned three-neck flask containing Solution 1.

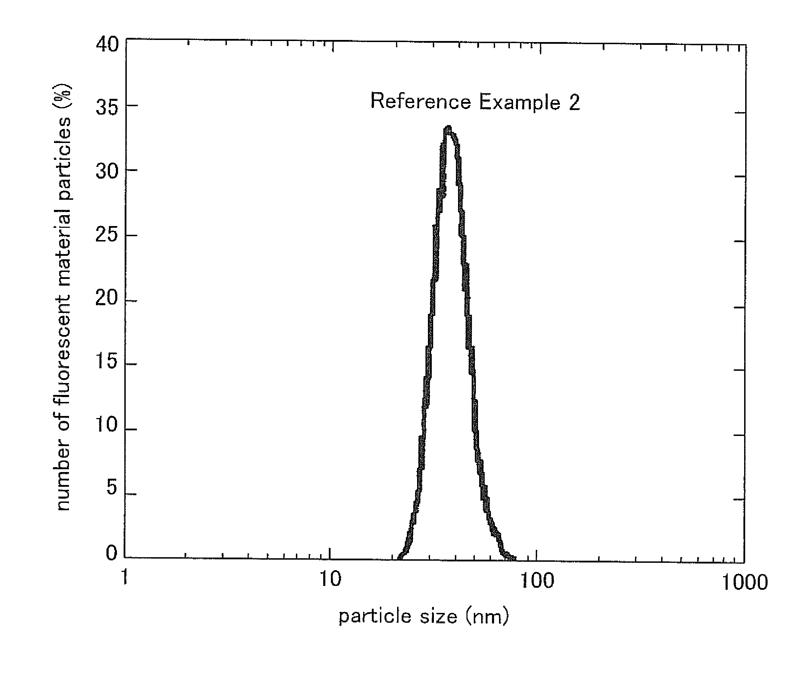

After completion of the addition, the resultant mixture was stirred at 80°C for 3 hours. The pH immediately after Solution 2 was added dropwise was 8.2. After that, the mixture was cooled until reaching room temperature to obtain a yellowish white turbidity aqueous dispersion. The resultant dispersion was treated by an ultrasonic homogenizer, then measured by Malvern HPPS (manufactured by Malvern). It was found that the homogenous particles had an average particle size of 38nm (see Fig. 2).
This dispersion was irradiated with a ultraviolet lamp having a dominant wavelength of 302nm and a green fluorescence emission was observed. Furthermore, an emission wavelength was confirmed by PL-250 (manufactured by JASCO corp.) and a peak of the emission wavelength was found to be 544nm. The microparticles were characterized by X-ray diffractometer (XRD-6100, manufactured by Shimazu Corporation) and the result corresponded with diffraction data of yttrium vanadate. Furthermore, the fluorescent material was studied by ICP emission spectrophotometer (ICPS-7510, manufactured by Shimazu Corporation) and it was found that the fluorescent material was a substrate comprising vanadium, yttrium and terbium elements.
This dispersion (referred to as "Fluorescent material aqueous dispersion 2" hereinafter) was used as a microparticulate fluorescent material which was added to an ink composition of the following Example.

### <Reference Example 3>

A condenser as a reflux, thermometer and stirrer were attached to a 200ml four neck flask and the flask was put in a water bath. 40.0ml of water, 1.34g (2.6mmol) of yttrium oxalate tetrahydrate and 0.09g (0.2mmol) of europium nitrate hexahydrate were added to the flask, they were mixed at 70°C for 1 hours, 0.62g of trisodium citrate dihydrate was added thereto, after further 30mins, an ethyleneglycol solution of bismuth compound obtained by dissolving 0.48g (1.2mmol) of anhydrous bismuth nitrate into 10g of ethyleneglycol was added and then mixed at 70°C for 2 hours to prepare Solution 1.

Separately, 40.0ml water which was adjusted as pH 12.5 by sodium hydroxide was measured and poured into a 100ml beaker and then 0.55g (3.0mmol) of sodium ortho-vanadate was added thereto and dissolved to prepare Solution 2. Then, Solution 2 was added dropwise to the above-mentioned three-neck flask containing Solution 1. After completion of the addition, the resultant mixture was stirred at 70°C for 3 hours. The pH immediately after Solution 2 was added dropwise was 7.5. After that, the mixture was cooled until room temperature and stirred for 72 hours at room temperature to obtain a yellowish white turbidity aqueous dispersion. The resultant dispersion was treated by an ultrasonic homogenizer, then measured by Malvern HPPS (manufactured by Malvern). It was found that the homogenous particles have an average particle size of 55nm (see Fig. 2).
This dispersion was irradiated with a ultraviolet lamp having a dominant wavelength of 365nm and a red fluorescence emission was observed. Furthermore, an emission wavelength was confirmed by PL-250 (manufactured by JASCO corp.) and a peak of the emission wavelength was found at to be 615nm. The microparticles were subjected to definition by X-ray diffractometer (XRD-6100, manufactured by Shimazu Corporation) and the result corresponded with a diffraction data of yttrium vanadate. Furthermore, the fluorescent material was studied by an ICP emission spectrophotometer (ICPS-7510, manufactured by Shimazu Corporation) and it was found that the fluorescent material was a substrate comprising vanadium, yttrium, europium and bismuth elements.
This dispersion (referred to as "Fluorescent material aqueous dispersion 3" hereinafter) was used as a microparticulate fluorescent material which was added to an ink composition of the following Example.

### <Reference Example 4>

Fluorescent material aqueous dispersion 3 was treated by centrifugation at 12000rpm for 60minutes using a centrifugation device to obtain a fluorescent material paste having a water content of 51%. This paste was put into a hot air dryer for drying it at 80°C for 24 hours and the resultant solid was pulverized in a mortar to obtain fluorescent material fine powder. The resultant fluorescent material fine powder was dispersed into water, the dispersion was treated by a ultrasonic homogenizer and then measured by Malvern HPPS (manufactured by Malvern). It was found that the particles have an average particle size of 57nm.
This fluorescent material fine powder (referred to as "Fluorescent material fine powder 1" hereinafter) was used as a microparticulate fluorescent material which was added to an ink composition of the following Example.

### <Reference Example 5>

Fluorescent material aqueous dispersion 3 was treated by centrifugation at 10000rpm for 80minutes using a centrifugation device to obtain a paste containing 40% of the fluorescent material component. 30g of n-octane was added to 50g of the paste, well stirred in order to carry out a phase conversion, and the separated water was removed in order to obtain a fluorescent material organic solvent dispersion. Furthermore, in order to sufficiently remove water from the fluorescent material organic solvent dispersion, a vacuum heating dehydration was carried out to remove a residual water. The resultant dispersion was diluted with n-octane so that the amount of a fluorescent material component was 0.1%, the diluted dispersion was treated with a ultrasonic homogenizer and then measured by Malvern HPPS (manufactured by Malvern). It was found that the particles having an average particle size of 56nm.
This fluorescent material organic solvent dispersion (referred to as "Fluorescent material organic solvent dispersion 1" hereinafter) was used as a micraparticulate fluorescent material which was added to an ink composition of the following Example.

### <Example 1>

Fluorescent material aqueous dispersion 1 was treated with a centrifugation device at 12000rpm for 60minutes to obtain a paste containing 40% of a fluorescent material component. An aqueous inkjet printing ink having the following composition was prepared

| | |
|---|---|
| the paste of Fluorescent material aqueous dispersion 1 (fluorescent material content 40%) | 13% |
| acryl resin emulsion (IJB-3000CL, manufactured by Sinloihi Co.,Ltd., solid content 22%) | 10% |
| glycerin | 15% |
| dimethyl ethanol amine | 0.2% |
| ethylene glycol | 4% |
| dispersant (Sufynol 465, manufactured by Nissin Chemical Industry Co.,Ltd.) | 1% |
| triethylene glycol monobutylether | 4% |
| water | to add 100% |

The above-mentioned ink was filtered by a 10 µm membrane filter to obtain the aqueous inkjet printing ink.

### <Example 2>

Fluorescent material aqueous dispersion 2 was treated with a centrifugation device at 12000rpm for 60minutes to obtain a paste containing 30% of a fluorescent material component. An aqueous inkjet printing ink having the following composition was prepared.

| | |
|---|---|
| the paste of Fluorescent material aqueous dispersion 2 (fluorescent material content 30%) | 27% |
| acryl resin emulsion (IJB-3000CL, manufactured by Sinloihi Co.,Ltd., solid content 22%) | 12% |
| glycerin | 15% |
| triethanol amine | 0.3% |
| diethylene glycol | 5% |
| dispersant (Sufynol 465, manufactured by Nissin Chemical Industry Co.,Ltd.) | 1% |
| triethylene glycol monobutylether | 5% |
| water | to add 100% |

The above-mentioned ink was filtered by a 5 µm membrane filter in order to obtain the aqueous inkjet printing ink.

### <Example 3>

Fluorescent material aqueous dispersion 3 was treated with a centrifugation device at 9000rpm for 20minutes and then a transparent supernatant was removed in order to obtain a fluorescent material aqueous dispersion containing 10% of a fluorescent material component. An aqueous inkjet printing ink having the following composition was prepared

| | |
|---|---|
| Fluorescent material aqueous dispersion 3 (fluorescent material content 10%) | 30% |
| acryl resin emulsion (IJB-3000CL, manufactured by Sinloihi Co.,Ltd., solid content 22%) | 10% |
| glycerin | 14% |
| triethanol amine | 0.3% |
| diethylene glycol | 7% |
| dispersant (Olfine E1010, manufactured by Nissin Chemical Industry Co.,Ltd.) | 1% |
| triethylene glycol monobutylether | 7% |
| water | to add 100% |

The above-mentioned ink was filtered by a 8 µm membrane filter in order to obtain the aqueous inkjet printing ink.

### <Example 4>

An organic solvent inkjet printing ink having the following composition was prepared by using Fluorescent material fine powder 1:

| | |
|---|---|
| Fluorescent material fine powder 1 | 7% |
| polyvinyl butyral (S-LEC BL-10, manufactured by SEKISUI CHEMICAL Co.,Ltd.) | 2% |
| diethylene glycol diethylether (manufactured by Nippon Nyukazai Co.,Ltd.) | 45% |
| surface regulator (BYK-UV3500, manufactured by BYK JAPAN KK) | 0.4% |
| dipropyeleneglycol monomethylether, | to add 100% |

The above-mentioned ink was filtered, by a 10 µm membrane filter to obtain the organic solvent inkjet printing ink.

### <Example 5>

An organic solvent inkjet printing ink having the following composition was prepared by using Fluorescent material organic solvent dispersion 1:

| | |
|---|---|
| Fluorescent material organic solvent dispersion 1 | 12.5% |
| polyvinyl butyral (S-LEC BL-10, manufactured by SEKISUI CHEMICAL Co.,Ltd.) | 2% |
| diethylene glycol diethylether (manufactured by Nippon Nyukazai Co.,Ltd.) | 45% |
| surface regulator (BYK-UV3500, manufactured by BYK JAPAN KK) | 0.4% |
| dipropyeleneglycol monomethylether | to add 100% |

The above-mentioned ink was filtered by a 10 µm membrane filter to obtain the organic solvent inkjet printing ink.

### <Example 6>

A UV cure inkjet printing ink having the following composition was prepared by using Fluorescent material fine powder 1:

| | |
|---|---|
| Fluorescent material fine powder 1 | 7% |
| polyester acrylate (Aronix M8030 ,manufactured by Toagosei Co.,Ltd.) | 5% |
| photo polymerization initiator (IRGACURE 819 ,manufactured by Chiba Japan KK) | 3% |
| 2-hydroxypropyl acrylate | to add 100% |

### <Example 7>

An offset printing ink having the following composition was prepared by using Fluorescent material fine powder 1:

| | |
|---|---|
| Fluorescent material fine powder 1 | 50% |
| polyoxyethylenealkyl allylether | 5% |
| alkyd resin | 10% |
| rosin denatured phenol resin varnish | 10% |
| No. 5 solvent (manufactured by Nippon Oil Corporation) | 25% |

The above-mentioned mixture was sufficiently mixed and then milled with a three-roller mill to prepare a base ink. An offset printing ink having the following composition was obtained using the base ink:

| | |
|---|---|
| base ink | 35% |
| rosin denatured phenol resin varnish | 50% |
| fluorine varnish | 2% |
| cobalt naphthenate (Co: 6%) | 1% |
| No. 5 solvent (manufactured by Nippon Oil Corporation) | 12% |

The above-mentioned rosin denatured phenol resin varnish was prepared by dissolving 40% of rosin denatured phenol resin (Hitanol 27A, manufactured by Hitachi Chemical Co.,Ltd.), 25% of linseed oil, and 35% of No.5 solvent while homogeneously heating them at 220°C.

### <Comparative Example 1>

29g of yttrium oxide, 4g of europium oxide, 27g of vanadium oxide (V) and 28g of bismuth oxide were mixed, charged in a crucible of alumina, and calcined in a baking furnace at 1150°C for 3 hours under an air to obtain a sinter of yttrium vanadate activated by bismuth and europium. The resultant sinter was treated with Nano Jetmizer NJ-30 (manufactured by Aishin Nano Technologies CO.,LTD) and then classified by ultrafine particle precision classifier KFSH-150 (manufactured by Aishin Nano Technologies CO.,LTD) to obtain a fluorescent material having an average particle size of 4.5 µm. This fluorescent material was irradiated with a ultraviolet lamp having a dominant wavelength of 365nm and a red fluorescence emission was observed. Furthermore, an emission wavelength was confirmed by PL-250 (manufactured by JASCO corp.) and a peak of the emission wavelength was found at to be 617nm. An aqueous inkjet printing ink was prepared by using the fluorescent material as the following composition:

| | |
|---|---|
| YVO₄:Eu,Bi (an average particle size 4.5 µm) | 3% |
| acryl resin emulsion (IJB-3000CL, manufactured by Sinloihi Co.,Ltd., solid content 22%) | 10% |
| glycerin | 14% |
| triethanol amine | 0.3% |
| diethylene glycol | 7% |
| dispersant (Sufynol 465, manufactured by Nissin Chemical Industry CO.,Ltd.) | 1% |
| triethylene glycol monobutylether | 7% |
| water | to add 100% |

The above-mentioned ink was filtered by a 20 µm membrane filter in order to obtain the aqueous inkjet printing ink.

### <Comparative Example 2>

The fluorescent material obtained in Comparative Example 1 (an average particle size 4.5 µm) was further treated with Nano Jetmizer NJ-30 (manufactured by Aishin Nano Technologies CO.,LTD) and then classified by ultrafine particle precision classifier KFSH-150 (manufactured by Aishin Nano Technologies CO.,LTD) to obtain a fluorescent material having an average particle size of 2.3 µm. An aqueous inkjet printing ink having the following composition was prepared by using the fluorescent material:

| | |
|---|---|
| YV0₄:Eu,Bi (an average particle size 2.3 µm) | 3% |
| acryl resin emulsion (IJB-3000CL, manufactured by Sinloihi Co.,Ltd., solid content 22%) | 10% |
| glycerin | 14% |
| triethanol amine | 0.3% |
| diethylene glycol | 7% |
| dispersant (Sufynol 465, manufactured by Nissin Chemical Industry Co.,Ltd.) | 1% |
| triethylene glycol monobutylether | 7% |
| water | to add 100% |

The above-mentioned ink was filtered by a 20 µm membrane filter to obtain the aqueous inkjet printing ink.

### <Comparative Example 3>

An organic solvent inkjet printing ink having the following composition was prepared with the fluorescent material obtained in Comparative Example 1:

| | |
|---|---|
| YVO₄:Eu,Bi (an average particle size 4.5 µm) | 7% |
| polyvinyl butyral (S-LEC BL-10, manufactured by SEKISUI CHEMICAL Co.,Ltd.) | 2% |
| diethylene glycol diethylether (manufactured by Nippon Nyukazai Co.,Ltd.) | 45% |
| surface regulator (BYK-UV3500, manufactured by BYK JAPAN KK) | 0.4% |
| dipropyeleneglycol monomethylether | to add 100% |

The above-mentioned ink was filtered by a 15 µm membrane filter in order to obtain the organic solvent inkjet printing ink.

### <Comparative Example 4>

The fluorescent material obtained in Comparative Example 1 (an average particle size 4.5 µm) was further treated with Nano Jetmizer NJ-30 (manufactured by Aishin Nano Technologies Co.,Ltd and then classified by ultrafine particle precision classifier KFSH-150 (manufactured by Aishin Nano Technologies Co.,Ltd) to obtain a fluorescent material having a mass median particle diameter of 2.1 µm. A UV cure printing ink was prepared with the fluorescent material as the following composition:

| | |
|---|---|
| YVO₄:Eu,Bi (a mass average 2.1 µm) | 7% |
| polyester acrylate (Aronix M8030 ,manufactured by Toagosei CO.,LTD.) | 5% |
| photo polymerization initiator (IRGACURE 819, manufactured by Chiba Japan KK) | 3% |
| 2-hydroxypropyl acrylate | to add 100% |

### <Comparative Example 5>

An offset printing ink having the following composition was prepared with the fluorescent material obtained in Comparative Example 1 (a mass average 4.5 µm):

| | |
|---|---|
| YVO₄:Eu,Bi (a mass average 4.5 µm) | 50% |
| a dispersant | 5% |
| alkyd resin | 10% |
| rosin denatured phenol resin varnish | 10% |
| No.5 solvent (manufactured by Nippon Oil Corporation) | 25% |

The above-mentioned mixture was sufficiently mixed and then milled with a three-roller mill to prepare a base ink. An offset printing ink having the fillowing composition was obtained with the base ink:

| | |
|---|---|
| the base ink | 35% |
| rosin denatured phenol resin varnish | 50% |
| fluorine varnish | 2% |
| cobalt naphthenate (Co: 6%) | 1% |
| No. 5 solvent (manufactured by Nippon Oil Corporation) | 12% |

The above-mentioned rosin denatured phenol resin varnish was prepared by dissolving 40% of rosin denatured phenol resin (Hitanol 27A, manufactured by Hitachi Chemical Co.,Ltd.), 25% of linseed oil, and 35% of No. 5 solvent whicle uniformly heating them at 220°C.

The inks prepared by Examples 1 to 3 and Comparative Examples 1 and 2 were printed on a paper to which a fluorescent brightening agent was not added, using Inkjet printer EM-930C manufactured by SEIKO EPSON Corporation.
The inks prepared by Examples 4 to 5 and Comparative Example 3 were printed on a vinyl chloride sheet to which a fluorescent brightening agent was not added, using Inkjet printer JV3-250SPF manufactured by MIMAKI ENGINEERING CO.,LTD.. The inks prepared by Example 6 and Comparative Example 4 were printed on a vinyl chloride sheet to which a fluorescent brightening agent was not added, using Inkjet printer UJF-605CII manufactured by MIMAKI ENGINEERING CO.,LTD. The results were as provided in Table 1. In this connection, the evaluation was carried out was as follows.

### Invisibility and light emission with ultraviolet ray excitation,

Regarding a printed material after 30 seconds of continuous printing, an invisibility of a printed surface under a fluorescent lamp and a light emission of the printed surface when a black light having a dominant wavelength of 365nm or 302nm was irradiated were evaluated by a visual check. Evaluation standard was as follows.

A: The printed surface was not recognized by a visual check under a fluorescent light and was vividly emitted under the black light.
B: The printed surface was recognized by a visual check under a fluorescent light and under the black light, was vividly emitted light.
C: No printing was made and accordingly, the printing was not recognized.

### Evaluation of printing stability

10 minutes continuous printing was carried out by the above-mentioned inkjet printer, and after 10 minutes of the printing, the printing was evaluated by a visual check.

A: Almost uniform printing was possible
B: Even although slight nozzle jamming was observed, a printing was possible.
C: No printing was made.

### Evaluation of ink sediment

The prepared ink was kept under 75%RT, 60°C for 1 month and then the state of the ink was observed by a visual check. By using the ink after storage, 10 minutes continuous printing was carried out by inkjet printer EM-930C manufactured by SEIKO EPSON Corporation, and after 10minutes of the printing, the printing was evaluated by a visual check.

A: No ink sediment was observed. Furthermore, good-looking printing was possible.
B: No ink sediment was observed. Although slight nozzle jamming was observed, a printing was possible.
C: Ink sediment was observed. A printing test was carried out but no printing was possible.

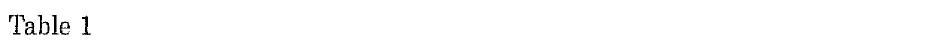

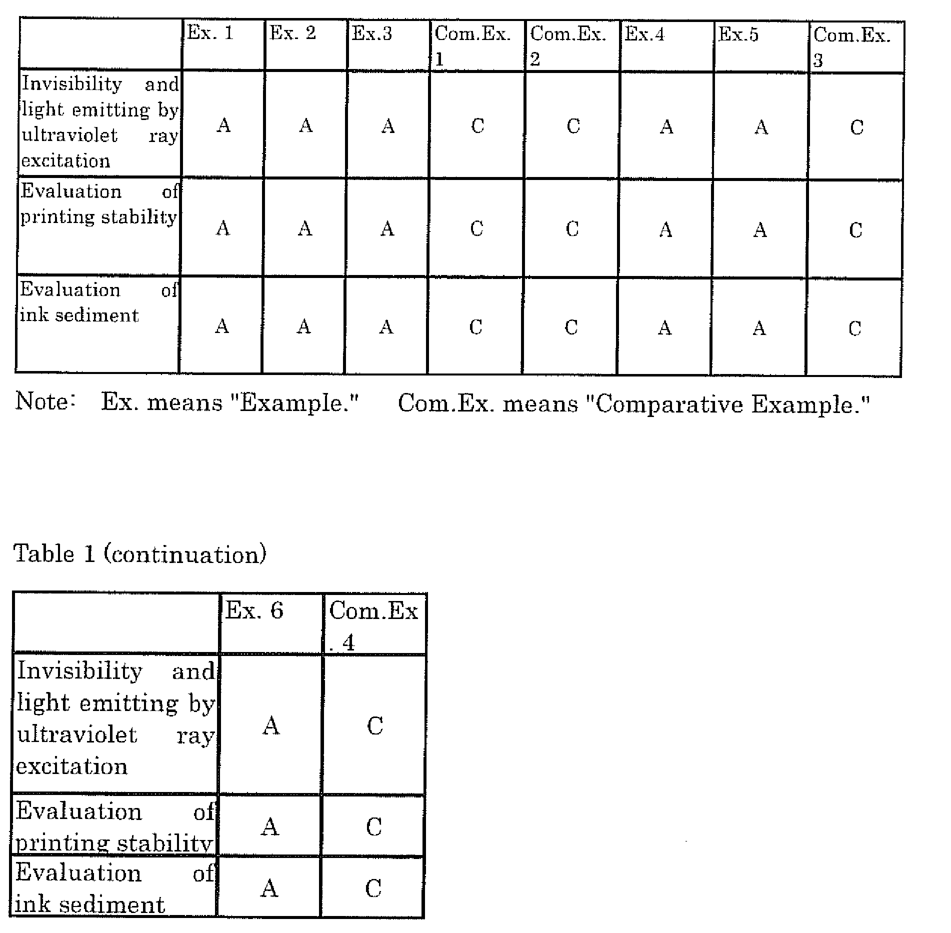

### Invisibility and light emission with ultraviolet ray excitation

Regarding inks of Example 7 and Comparative Example 5, an offset printing was carried out by RI printing test machine (manufactured by Akira Seisakusho KK.).
An aspect under a fluorescent lamp and a light emission of the printed surface when a black light having a main wavelength of 302nm or 365nm was irradiated were evaluated by a visual check. The result was as shown in Table 2.

A: The printed surface was not recognized by a visual check under a fluorescent light and was vividly emitted under the black light.
B: The printed surface was recognized by a visual check under a fluorescent light. Under the black light, a slight emission was recognized.
C: No printing was made.

**Table 3**

| | Example 7 | Comparative Example 5 |
|---|---|---|
| Invisibility of printed surface and light emitting by ultraviolet light | A | B |
| Comments | Uniformly printing was made and light was vividly emitted under black light. | The printed surface looked like brown. Furthermore, light was slightly emmited under black light. |

As it is clear from Table 1 and Table 2, regarding Examples 1 to 7 of the ink compositions of the present invention, the printed surface was not recognized under a fluorescent light and vividly light emission was observed under a black light. On the other hand, as for Comparative Examples 1, 2, 3 and 4 which were inkjet printing ink containing fluorescent materials having a large particle size, no printing was possible due to nozzle jamming and storage stability of the ink was poor. Furthermore, regarding Comparative Example 5 which was an offset printing ink containing the fluorescent material having a large particle size, the fluorescent material in the ink was broken and made a non-uniform printing surface.

### Brief Explanation of Drawings

Fig 1 is a figure showing the measured data for a particle size distribution of the microparticulate fluorescent material obtained in Reference Example 1.
Fig 2 is a figure showing the measured data for a particle size distribution of the microparticulate fluorescent material obtained in Reference Example 2.

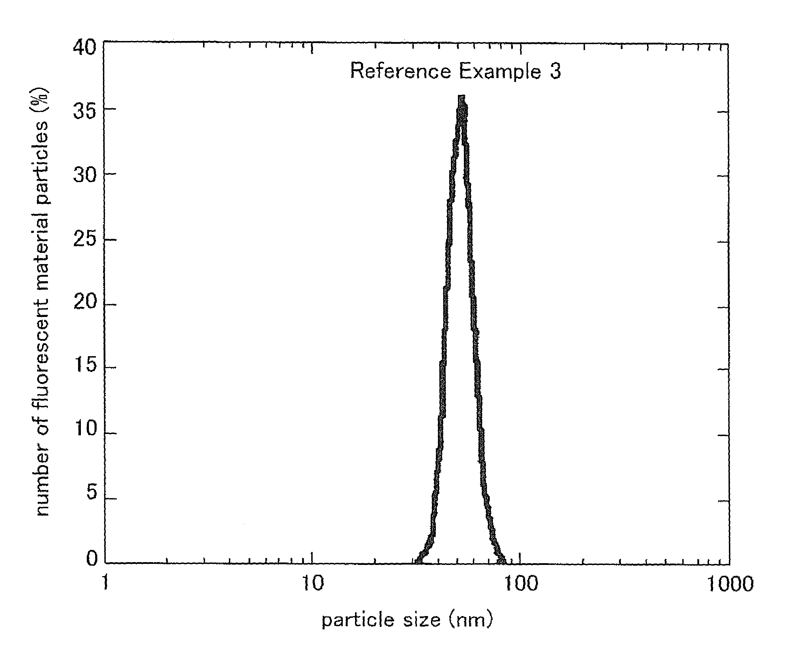

Fig 3 is a figure showing the measured data for a particle size distribution of the microparticulate fluorescent material obtained in Reference Example 3.

## Claims

1. An ink composition comprising a microparticulate fluorescent material represented by a formula YVO₄:A, wherein A is a rare earth metal other than yttrium, said fluorescent material emitting a fluorescent light due to a ultraviolet ray excitation, having an average primary particle size of 30∼400nm and having not been calcined.

2. The ink composition according to claim 1, wherein the microparticulate fluorescent material is obtained by mixing Composition (I) containing a yttrium compound, a compound of rare earth metal other than yttrium and a complex forming agent in water with Composition (II) containing a vanadium compound in water, and then reacting them.

3. The ink composition according to claim 1, wherein the fluorescent material is represented by a formula YVO₄:A,B wherein A is a rare earth metal other than yttrium and B is an element belonging to any of Groups 13 to 17 of the periodic table (long form).

4. The ink composition according to any one of claims 1 to 3, wherein the rare earth metal other than yttrium is selected from the group consisting of Sc, La, Ce, Pr, Nd, Pm, Sm, Eu, Gd, Tb, Dy, Ho, Er, Tm, Yb and Lu.

5. The ink composition according to claim 3 or 4, wherein the yttrium compound, the vanadium compound, the compound of rare earth metal other than yttrium and/or the compound of the element belonging to any of Groups 13 to 17 of the periodic table (long form) are selected from the group consisting of hydroxides, chelate compounds, inorganic acid salts, organic acid salts, oxygen acid salts, halides and alkoxides.

6. The ink composition according to any one of claims 2 to 5, wherein the complex forming agent is selected from the group consisting of citric acid, oxalic acid and derivatives thereof.

7. An ink composition containing a microparticulate fluorescent material represented by a formula YVO₄:A, Bi, wherein A is a rare earth metal other than yttrium, said fluorescent material emitting a fluorescent light by a ultraviolet excitation, and being prepared by mixing Composition (I) containing a yttrium compound, a compound of a rare earth metal other than yttrium and a complex forming agent in water with Composition (II) containing a vanadium compound in water and then reacting them, and having an average primary particle size of 30-400nm and having not been calcined, and wherein a Bi compound dissolved in ethylene glycol is added to at least one of said Composition (I) and said Composition (II) and these compositions are reacted.

8. The ink composition according to any one of claims 1 to 7, which further comprises a binder resin and a solvent.

9. The ink composition according to any one of claims 1 to 8, for an inkjet printing ink.

10. The ink composition according to any one of claims 1 to 8, for an offset printing ink.
